# EUROPEAN PATENT SPECIFICATION

(11) **EP 3 709 613 B1**
(45) Date of publication and mention of the grant of the patent: **09.02.2022**
(21) Application number: 19162793.4
(22) Date of filing: 14.03.2019
(51) Int. Cl.: H04M 1/72412, H04M 1/72454, H04M 1/72463

(54) **APPARATUS, METHOD AND COMPUTER PROGRAM FOR TRIGGERING A FUNCTION**
VORRICHTUNG, VERFAHREN UND COMPUTERPROGRAMM ZUM AUSLÖSEN EINER FUNKTION
APPAREIL, PROCÉDÉ ET PROGRAMME INFORMATIQUE POUR DÉCLENCHER UNE FONCTION

(43) Date of publication of application: 16.09.2020
(73) Proprietor: Nokia Technologies Oy, 02610 Espoo (FI)
(72) Inventor: COYLE-GILCHRIST, Matthew, London, W2 6PR (GB)
(74) Representative: Nokia EPO representatives

(56) References cited:
- WO-A1-2016/140858
- WO-A1-2018/050769

## Description

### TECHNOLOGICAL FIELD

Examples of the present disclosure relate to an apparatus, method and computer program for triggering a function. Certain examples, though without prejudice to the foregoing, relate to an apparatus, method and computer program for causing a function to be triggered on a user device for reducing user distraction by the user device.

### BACKGROUND

The ubiquity of electronic devices such as mobile devices, along with the addictive nature of software thereon (e.g. social media and messaging apps), has given rise to a new phenomenon wherein a user of a mobile device, such as a parent/carer, may become distracted by the user's mobile device when the user is meant to be looking after the user's child/charge. Such parental distraction due to parents using their mobile device instead of paying attention to/interacting with their child/children has been termed parental "Technoference" (i.e. "technical interference"). This can have an adverse affect on a child's development, e.g. verbal skills, and can even give rise to behavioural issues and poor social skills.

WO 2016/140858 A1 relates to a method and apparatus for reducing user distraction. During operation a user device will show content for limited periods of time during a context where the user is not to be distracted. For example, a police officer driving may only be able to look at the screen of his device for a first period of time (e.g., 3 seconds). After that period of time, the device will prevent further viewing (preferably by turning off the screen). After a second period of time (e.g., 10 seconds), the device will again allow the officer to look at the screen for the first period of time. When the device has determined that user distraction does not need to be prevented, the device will allow full access to the user.

WO 2018/050769 A1 relates to a system and method for use in assisting a user to focus on performing a personal care activity. The system comprises a processing unit. The processing unit is configured to acquire data associated with the user during the personal care activity, process the acquired data to detect at least one characteristic indicative of a distractive event for the user in performing the personal care activity and initiate one or 5 more actions associated with the detected at least one characteristic indicative of the distractive event to assist the user in focusing on the personal care activity.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to various, but not necessarily all, examples of the disclosure there is provided an apparatus comprising means for:
determining whether a user distraction criterion has been met, the user distraction criterion relating to use of a user device, by a first user, exceeding a threshold level;
determining whether a presence criterion has been met, the presence criterion relating to:
   a proximity of at least a second user to the user device being below a threshold level, and/or
   a proximity of the at least second user to the first user being below a threshold level;
determining use, by a third user, of another user device;
determining whether at least a second user distraction criterion has been met,
the at least second user distraction criterion relating to use, by the third user, of the another user device;
determining a proximity of:
   the another user device to the at least second user, and/or
   the third user to the at least second user;
determining whether a second presence criterion has been met, the second presence criterion relating to a proximity of the third user to the at least second user; and
responsive to determining that the first and at least second user distraction criteria and the first and second presence criteria have been met, causing the triggering of a function on the user device and/or the another user device.

According to various, but not necessarily all, examples of the disclosure the apparatus can be provided in at least one of: a chipset, a module, a device or a portable electronic device.

According to various, but not necessarily all, examples of the disclosure, the apparatus of may be comprised in the user device itself. In other examples, the apparatus is separate of the user device and may be a separate device, not least for example a server.

According to various, but not necessarily all, examples of the disclosure there is provided a method comprising causing, at least in part, actions that result in:
determining whether a user distraction criterion has been met, the user distraction criterion relating to use of a user device, by a first user, exceeding a threshold level;
determining whether a presence criterion has been met, the presence criterion relating to:
   a proximity of at least a second user to the user device being below a threshold level, and/or
   a proximity of the at least second user to the first user being below a
   threshold level;
determining use, by a third user, of another user device;
determining whether at least a second user distraction criterion has been met,
the at least second user distraction criterion relating to use, by the third user, of the another user device;
determining a proximity of:
   the another user device to the at least second user, and/or
   the third user to the at least second user;
determining whether a second presence criterion has been met, the second presence criterion relating to a proximity of the third user to the at least second user; and
responsive to determining that the first and at least second user distraction criteria and the first and second presence criteria have been met, causing the triggering of a function on the user device and/or the another user device.

According to various, but not necessarily all, examples of the disclosure there is provided computer program instructions for causing an apparatus to perform:
determining whether a user distraction criterion has been met, the user distraction criterion relating to use of a user device, by a first user, exceeding a threshold level;
determining whether a presence criterion has been met, the presence criterion relating to:
   a proximity of at least a second user to the user device being below a threshold level, and/or
   a proximity of the at least second user to the first user being below a threshold level;
determining use, by a third user, of another user device;
determining whether at least a second user distraction criterion has been met, the at least second user distraction criterion relating to use, by the third user, of the another user device;
determining a proximity of:
   the another user device to the at least second user, and/or
   the third user to the at least second user;
determining whether a second presence criterion has been met, the second presence criterion relating to a proximity of the third user to the at least second user; and
responsive to determining that the first and at least second user distraction criteria and the first and second presence criteria have been met, causing the triggering of a function on the user device and/or the another user device.

According to various, but not necessarily all, examples of the disclosure there are provided examples as claimed in the appended claims. The various features of the appended claims can be features of any of the embodiments described in the foregoing portion of the 'Brief Summary' section.

### BRIEF DESCRIPTION OF THE DRAWINGS

For a better understanding of various examples of the present disclosure that are useful for understanding the detailed description and certain embodiments of the invention, reference will now be made by way of example only to the accompanying drawings in which:
FIG. 1 schematically illustrates an example method of the subject matter described herein;
FIG. 2 schematically illustrates a further example method of the subject matter described herein;
FIG. 3 schematically illustrates an example apparatus and computer program of the subject matter described herein;
FIG. 4 schematically illustrates an example system of the subject matter described herein;
FIG. 5 schematically illustrates a yet further example method of the subject matter described herein; and
FIG. 6 schematically illustrates a yet further example system of the subject matter described herein; and
FIGs. 7A and 7B illustrate examples of triggered functions.

The Figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

The Figures schematically illustrate an apparatus 300. The apparatus comprises means 301 configured to enable the apparatus to determine whether a user distraction criterion has been met. The user distraction criterion relates to use, by a first user 401, of a user device 400 exceeding a threshold level. The means 301 is also configured to enable the apparatus to determine whether a presence criterion has been met. The presence criterion relates to: a proximity of at least a second user 402 to the user device 400 being below a threshold level, and/or a proximity of at least a second user 402 to the first user being below a threshold level. In response to determining that the user distraction and presence criteria have been met, a function 712a, 712b is caused to be triggered on the user device 400.

Various, but not necessarily all, examples of the present disclosure can take the form of an apparatus, a computer implemented method, or a computer program. Accordingly, various, but not necessarily all, examples can be implemented in hardware, software or a combination of hardware and software. In some examples, the apparatus is embodied in the user device. In some examples, the apparatus is embodied in a separate device to that of the user device, not least for example a server.

For the purposes of illustration and not limitation, in various, but not necessarily all, examples the first user is a parent/carer, the user device is the parents mobile device, and the second user is the child/charge of the parent/carer. Upon determination that the criteria/conditions of:
i) parent distraction, and
ii) child presence
are both simultaneously satisfied, a function is caused to be triggered. The function is configured to intervene/reduce the parent's distraction, such as a notification to alert the parent of his/her distracted state of mobile device usage, or a modification of the operation of the mobile device to hinder, impede or preclude the parent's continued mobile device usage and state of distraction. For example, the triggered function may be presentation of a prompt/message to notify the parent of his/her distracted state of mobile device usage and disengagement from the child and encourage the parent to revert his/her attention to the child. Examples may thus prevent/reduce a parent being distracted by his/her mobile device, e.g. excessive usage of a mobile device, whilst in the child's company.

Examples of the disclosure may thus help avoid/reduce the parent's attention being taken away from the child and help avoid/reduce the parent disengaging with the child. Examples of the disclosure may thus help encourage the parent to interact with the child rather than their mobile device. Furthermore, by reducing parental distraction and increasing a parent's awareness of their child, examples may thereby help improve child safety and security.

Examples of the present disclosure advantageously, seek to address/ameliorate issues of "technoference" and parental distraction by effecting an intervention at the moment of distraction; namely causing the triggering a function to intervene in/restrict the parent's device usage when the two contextual conditions of: parental distraction and child proximity are simultaneously satisfied.

Previous existing solutions to such issues of technoference/distraction due to device usage have typically been purely educational, e.g. posters and leaflets encouraging parents to 'put down their phone'. Such non-technical solutions may be sub-optimal and not effective for modern parenting. Modern parenting is increasingly reliant upon positive aspects of mobile device usage, e.g. taking photos of children to share with family, recording the administration of medicine, obtaining information about childcare, maintaining contact between parents, etc. It is unrealistic to expect parents, when looking after their children, to: discard their mobile devices, put them away in inaccessible places, or even to turn them off. Most parents will not altogether stop using or carrying their devices merely because of the risk of disengaging with their children. Existing technical solutions for restricting usage of an electronic device are more typically aimed at restricting a child's device usage (i.e. reducing "screen time") rather than aimed at restricting the parent's usage time. Previous such device usage restrictions are merely schedule based, i.e. simply limiting device usage to a predetermined allocated amount of usage time per day and prohibiting further usage once the allotted time had been used up.

Without limiting the scope of the claims, a technical advantage/technical effect of various, but not necessarily all, examples of the present disclosure is that the contextual triggering of the function (e.g. based on the simultaneous satisfaction of device usage and child proximity/presence) can provide a greater degree of control and flexibility in the triggering of the distraction intervening function which can thereby better facilitate addressing/mitigating issues of parental distraction.

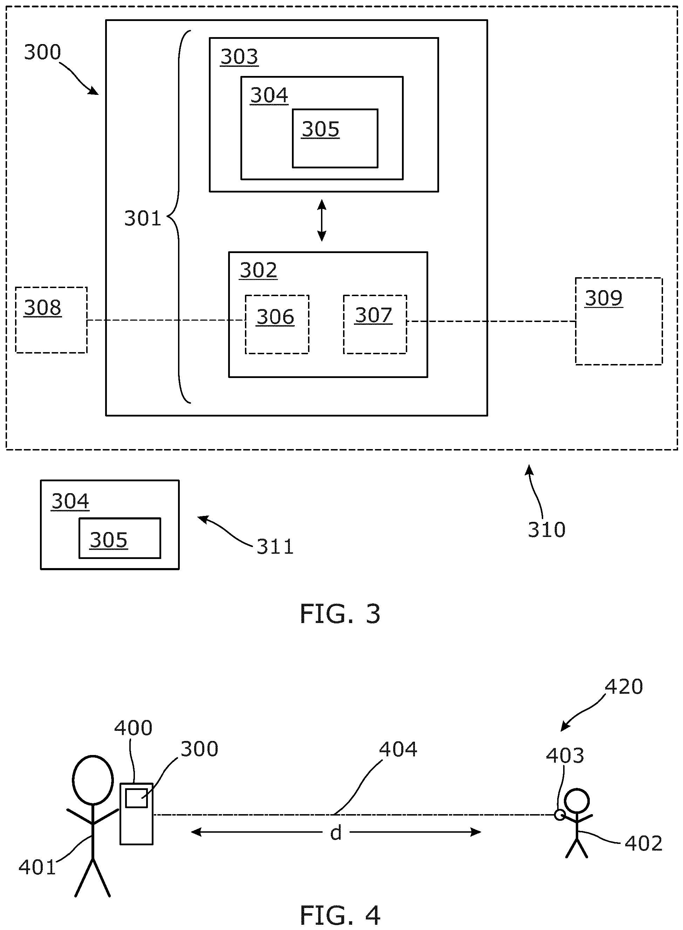

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) (such as in shown in FIG 3) so that the instructions which execute on the same create means for causing implementing the functions specified in the block or blocks, i.e. such that the method can be computer implemented. The computer program instructions can be executed by the processor(s) to cause a series of operational steps/actions to be performed by the processor(s) to produce a computer implemented process such that the instructions which execute on the processor(s) provide steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

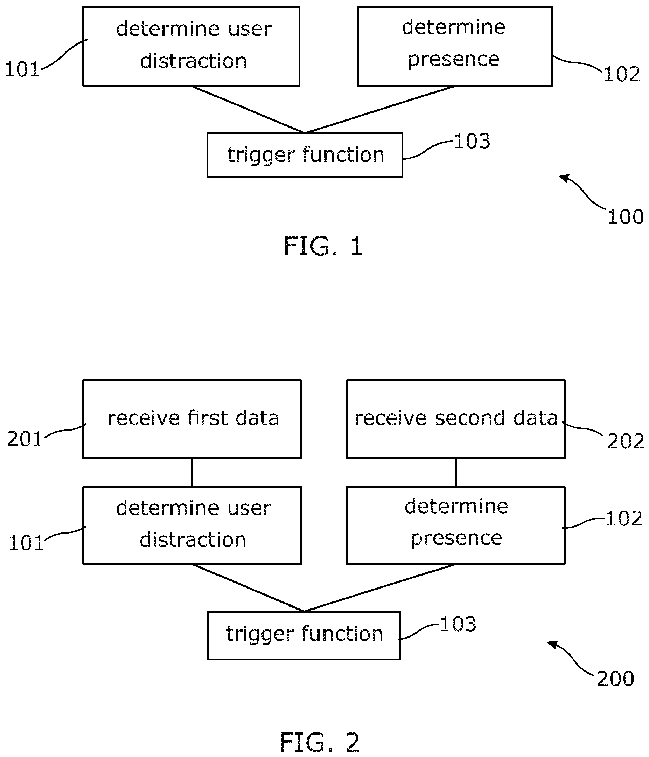

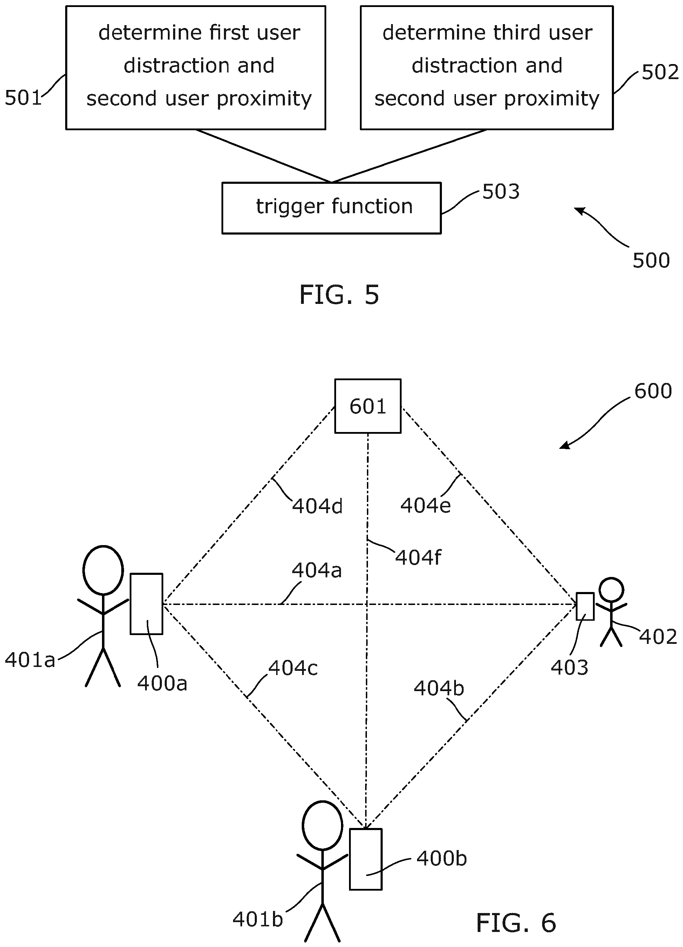

FIG. 1 schematically illustrates a flow chart of a method 100 according to an example of the present disclosure. The blocks of FIG. 1 are functional and the functions described may or may not be performed by a single physical entity, such as the apparatus 300 described with reference to FIG. 3 (which may be embodied in the user device 400 of FIG. 4, or may be embodied in a separate devices such as device 601 of Fig. 6, or a remote server).

In block 101, a determination is made as to whether a user distraction criterion has been met. The user distraction criterion relates to use of a user device, by a first user, exceeding a threshold level. As used herein, "user distraction" can be used to denote an excessive amount of user usage of the user device, i.e. the user distraction criterion being met may correspond to the first user's usage of the user device being in excess of a threshold amount. The first user's usage of the user device can be determined and quantified based, not least for example, on detected user usage time of the user device, user input to the user device, eye/gaze detection (e.g. detecting a user's gaze directed towards the user device /a display of the user device, or even another device such as an e-book reader), screen activation time (e.g. detecting a display of the user device being switched on/in an active high power state c.f. an off/sleep/low power state after elapse of a screen timeout period). In some examples, a determination of user distraction is based on a determination that an amount of usage time of the first user using the user device exceeds a threshold amount of time in a given period of time. In some examples, a determination of user distraction is based on a determination that a number of discrete user inputs received by the user device exceeds a threshold number of user inputs in a given period of time. In some examples, a determination of user distraction is based on a determination that a duration of: screen activation time and/or a user's gaze being focused on the user device /screen, exceeds a threshold period of time. In some examples, the operational mode/state of the user device may be used in the determination of usage, e.g. whether or not the user device, user input device (keypad/touchscreen), and/or screen of the user device is a locked state/operational mode.

In some examples, the threshold is predetermined. However, it is to be appreciated that the threshold need not be static/fixed. It could instead be variable, user adjustable and/or context dependent. For example, if the first user/parent and second user/child were at home and the TV were switched on, then a threshold of 5 minutes may be applied to permit up to 5 minutes usage. By contrast, if the parent and child were outside of the home walking along a road, then a differing/lower threshold (e.g. < 5 seconds of use) may be applied. Other examples of context include: a number and identity of people nearby, location (e.g. of the first user/ user device), time, as well as the detection of other nearby devices such as entertainment devices. Another example of context that may be used in determining the threshold level is whether or not the second user is sleeping. For example, a parent in a room with a child who is sleeping might be permitted larger amount of distraction (i.e. higher threshold level) as compared to the parent being in the room when the child is not yet asleep.

In block 102, a determination is made as to whether a presence criterion has been met. The presence criterion relates to a proximity to the user device, of at least a second user, being below a threshold level. As used herein, "presence" of the second user can be used to denote the second user being physically present/sufficiently proximal to the user device /first user such that the second user and user device /first user might be considered to be in the same location/area (i.e. physical proximity within a threshold level). In some examples, a determination is made as to whether a separation distance between the at least second user and the user device /first user is within a threshold distance. As with the usage threshold, the proximity threshold need not be fixed but could be variable, user adjustable and/or context dependent. In some examples, the determination of the proximity of the first and second user may take into account information related to a known location of the first and second users, not least such as a room layout of a building. For example, where a child's bed and a parent's bed are on either side of a wall, the child and parent in their respective beds may be separated by a short distance e.g. of the order of metre(s). However, whilst they share proximate absolute positions, knowledge of the layout of the house may enable a determination to be made that the parent and child are not actually together in the same room and hence that the presence criterion is not met. This may enable a parent lying in bed in his/her room to be permitted to use his/her device and be distracted since the presence criterion is not met.

In block 103, in response to determining that both the user distraction and presence criteria have been met, a function on the user device is caused to be triggered. Where the apparatus is not embodied in the user device itself, causing the triggering of a function may comprise sending a signal/message to the user device (e.g. a command) for the device to perform the function.

The function which is triggered can take various forms. The function can be configured to intervene in the first user's distraction, i.e. the first user's continued use of the user device, whilst the first user is in the presence/company of the second user. For example, (and as discussed further below) the function may notify the first user of the distractive/excessive usage of the user device. The function may modify the operation of the user device to inhibit/prevent the first user's distractive/excessive user device usage.

In some but not necessary all examples, the first user may be associated with the second user, i.e. rather than the second user being an arbitrary individual, there is a pre-determined association between the first and second users. For example, the first user may be a parent, a carer, a guardian or custodian of the second user, i.e. the second user is the child/charge of the first user. However, it is appreciated that examples of the disclosure are not limited to a parent/child relationship between the first and second users but could be readily applicable to differing users, e.g. not least: wherein a first user is to look after the second user, caregiver & care receiver, supervisor & supervisee, officer & charge and even owner & pet.

In some but not necessary all examples, the apparatus may be an electronic device, such as a mobile device/smart phone. In some but not necessary all examples, the apparatus may be comprised in/embodied in the user device itself. In some but not necessary all examples, the apparatus may be comprised in/embodied in a device separate and distinct to the user device.

FIG. 2 schematically illustrates a flow chart of a further method 200 according to an example of the present disclosure. The blocks 101 - 103 correspond to those of FIG. 1. The method further comprises block 201 in which first data is received and/or detected. The first data is indicative of use of the user device by the first user and is used to determine, in block 101, whether the user distraction criterion has been met. The method also further comprises block 202 in which second data is received and/or detected. The second data is indicative of the proximity of the at least second user to the user device /first user (or indicative of a location of the second user). The second data can thus be used (if necessary along with data indicative of a location of the user device /first user) to determine whether the presence/proximity criterion has been met.

In block 101, a determination is made as to whether a user distraction criterion has been met. There are numerous ways in which user distraction could be determined. In some but not necessary all examples, the determination of the user distraction criterion being met may correspond to detecting prolonged use of the user device (e.g. smart phone) by the first user, e.g. whether a parent is using his/her user device for greater than a predetermined period of time. In some examples, a simple timer can be used in the determination as to whether the distraction criterion has been satisfied. The detection of use of the user device may include the detection of at least one of: the user device being in an unlocked state, screen activation time e.g. a display of the user device being in a switched on/active state, user input to the user device being received, the user device outputting video, audio being outputted by the user device, a predetermined application being executed by the user device, the first user's face is visible (i.e. in the field of view) of a camera (e.g. front-facing camera) of the user device, eye/gaze tracking data of the first user's gaze indicating the first user's gaze is targeted at the user device/display of the user device, and/or the like. An advantage of using gaze tracking, e.g. determining that user's gaze is focussed on a display of the user device, is that certain usage, e.g. non-visual intensive usage, of the user device that does not overly distract the user (e.g. playing background music) may be permitted as such usage would not trigger the function since the user would not be looking at the user device.

In some examples, the determination as to whether the distraction criterion has been satisfied is based on timer information, for example in one of the following cases:
1) The first user uses their user device for a time period (T) exceeding a first time period threshold (T1), i.e. determining a single continual use time T > T1.
2) The first user uses their user device for a total duration (Tsum) exceeding a second time period threshold (T2) during a predetermined and/or rolling time period (Tsample), i.e. an overall sum time (Tsum) > T2 in a rolling time period (Tsample).

A suitable value for T1 can to be a small number of minutes, e.g. <1, <2, <3, <4, or <5 minutes. For example, it may be acceptable for the user to use their user device constantly for up to two minutes but not any longer, in which case T1 would be 2 mins.

A suitable value for T2 may be selected that depends upon the length of Tsample. If Tsample is 15 mins (for example) then a suitable value forT2 may be a small number of minutes such as 3 minutes. T2 should be small relative to Tsample. For example, T2 can be less than: a third, a quarter, a fifth, a sixth of Tsample. A smaller value for Tsample will reduce the maximum continuous length of user device use. This rolling time period approach can therefore be effective in limiting the duration of continuous use without permitting the first user e.g. to briefly discontinue use in order to reset the timer to circumvent the 1) T1 approach above.

Clearly, it is to be appreciated that there are other possible approaches that could be used in addition or instead to determine user distraction. In some examples, the number of discrete user inputs made by the first user within a certain time period are counted and used to measure/determine user distraction. In some examples, the number of content items (webpages, social media posts, etc.) that are presented (e.g. visually and/or audial output) to the first user are counted and used to measure/determine user distraction.

For example, the determination as to whether the distraction criterion has been satisfied can be based on user input. For example determining that a total number of user inputs (Usum) received at the user device exceeds a threshold number of user inputs (U) during a predetermined/rolling time period (Tsample). The determination as to whether the distraction criterion has been satisfied can be based on determining a number of content items presented to the first user via the user device exceeding a pre-determined threshold number of content items.

In some examples, the determination as to whether the distraction criterion has been satisfied is based on:
i) the user device being unlocked; and
ii) a user's gaze, e.g. camera image data or gaze tracking data relating to a determined location of the first user's gaze.

In some examples, the user's gaze is tracked during use of the user device to determine a level of user concentration/distraction. However, in some examples, a level of concentration/degree of distraction is immaterial (i.e. the parent should not be using his/her phone when they are with their child) so any prolonged use is considered distraction.

The first data received and/or detected in block 201 may comprise data indicative of use of the user device by the first user (i.e. such use as discussed above) which can be used to determine, in block 101, whether the user distraction criterion has been met. In this regard, the first data may comprise an indication of at least one of:
user input;
the user device being unlocked;
content items being presented;
output of video content
output of audio content
application being executed in the user device; and
a user's gaze.

Such first data, received and/or detected in block 201, may be used to determine/detect the first user's use of the user device which may then be used, in block 101, to determine whether the user distraction criterion has been met. For example, the detection of an output of audio/video content from the user device in excess of a threshold period of time (e.g. set by the first user or learnt by the user device), could be used to determine that the first user is in a distracted state, e.g. a parent/first user is listening to an audio book/music, watching a video or streaming media content. Even though the device may be in a locked state during media playback, nevertheless, the first user's distractive usage could still be detected and used to raise an alert so that the media playback/distractive user is not allowed for too long.

In some examples, the apparatus itself may comprise means, e.g. sensors, configured to detect/generate the first data. In some examples, the first data is detected/generated remotely and is received at the apparatus from one of more separate devices (e.g. via the user device and/or other remote devices).

In block 102, a determination is made as to whether a presence criterion has been met. There are numerous ways in which the presence of the at least second user (e.g. a child/children) could be determined. In some examples, the user device (e.g. parent's phone) could search for the presence of an electronic device associated with the second user (child's own phone or other trackable device) using Bluetooth ^{®}, NFC, or an RFID tag or other radio beacon worn by the second user as a wearable device e.g. a bracelet. In some examples the second user may carry a device that determines its own location and shares that with the first user's device, either directly or via a cloud service. For example, the second user may carry a GPS tracker and the GPS location determined by the tracker may be compared with the first user's location.

In some examples, the apparatus may directly detect the presence of the second user itself. For example, the apparatus may comprise a camera and face-recognition may be used to determine if the second user is visible to a camera of the apparatus. Where the apparatus is embodied in the user device, the first user, when using his/her apparatus/user device [e.g. a parent's smart phone] will typically be facing the second user in order to supervise the second user, and the second user may likely therefore be within the frame of view of the first user's user device' camera [e.g. the parent's smart phone's camera]). In some examples, a microphone of the apparatus can monitor ambient sound to detect the second user's voice or other noises associated with the second user (not least for example known voices/sounds/music associated with the second user [such as, where the second user is a child, children's television programmes, noises of children's toys, music from a child's mobile, etc.]). In some examples, an external sensor may be used to determine the location of the second user and/or its co-presence with/proximity to the first user. For example, an audio or video monitoring device, or even a smart speaker, that may be capable of determining that a child and parent/adult/carer are present together (e.g. via facial recognition and/or voice recognition).

The second data received and/or detected in block 202 may comprise data for use in determining a presence/proximity of the second user to the user device/first user (i.e. such use as discussed above) which can be used to determine, in block 102, whether the presence criterion has been met. In this regard, the second data may comprise an indication of at least one or more of:
location information of the at least second user;
information indicative of a proximity of the at least second user to the user device and/or first user;
location information of a device of the at least second user (e.g. a device that has been pre-assigned and associated with the second user); and
information indicative of a proximity of a device of the at least second user to the user device and/or first user.

Such second data, received and/or detected in block 202, may be used to determine/detect the second user's presence/proximity to the user device/first user which may then be used, in block 102, to determine whether the presence criterion has been met. In some examples, the apparatus itself may comprise means, e.g. sensors, configured to detect/generate the first data. In some examples, the first data is received from one of more devices separate and remote of the apparatus.

In block 103, in response to determining that both the user distraction and presence criteria have been met, a function on the user device is caused to be triggered. Where the apparatus is separate from the user device, causing the triggering of the function may comprise sending a signal (e.g. a command signal) or message for prompting the user device to perform the function. The function may be a 'soft' function/intervention that alerts to the first user to their distraction, a "medium" function/intervention that hinders/impedes continued use of the device/distraction, or a 'hard' function/intervention that forcibly ends the distraction. Alternatively, a combination of soft, medium and hard functions can be employed - e.g. a soft function that is followed by a hard function after a predefined period of time if it is determined that the distraction is continuing (e.g. that the soft function was ineffective).

An example of a soft function would be providing an alert to the first user, such as a light, alarm, pop-up alert or dialogue box. Any form of alert could be used, and it could be provided in an ambient/background manner (e.g. a red border around the screen or a background sound effect) rather than interrupting the user's interaction with the device such as a foreground pop-up would do.

An example of a hard function would be disabling features/functionality or applications of the device to inhibit user interaction with the device, for example for a certain period of time. In some examples, all non-essential features may be disabled/restricted whilst core features/functionality may be maintained (e.g. allowing phone calls, SMS messaging, map application and camera). For example, the user may be prohibited from accessing a web browser and a social media app, whilst still being permitted to access functions like the camera and the phone. In some examples, the determination of which feature(s)/application(s) to block is user-configurable in advance or alternatively it is pre-configured by the manufacturer. Alternatively, or in addition, the apparatus may determine a pattern of use of the user and adjust the determination of which feature(s)/application(s) to block. For example, the apparatus may determine that based on user's usage of the user device certain important feature(s)/application(s) are not blocked. In some examples, the apparatus, or a separate apparatus, e.g. server such as a cloud server, receives information of the user's usage patterns and determines/deduces from that which applications to block and which to allow (e.g. which are deemed important such that their use is allowed). In some examples, the apparatus, or a separate apparatus, e.g. server such as a cloud server, receives information of the user's usage patterns and determines/learns the user's way of using the user device and adjusts the usage threshold value based on the same.

In some examples, access to certain functions is continued to be provided. This could be extended to access to certain content also. For example, the user can use the web browser to access information such as the location of the nearest hospital, poison control, online maps, etc. but be blocked from accessing online shopping, social media websites, news websites, etc.

Finally some functions may lie between the soft and hard extremes in so much as they reduce the usability of the phone without actually prohibiting functionality. These functions seek to both to mildly inconvenience the user so that continued use of the mobile device is less pleasurable, and also to provide a constant reminder that the user should not be using their mobile device. An example of a medium function would be modifying the user interface/ displayed visual output of the device, for example one or more of:
i) modifying the colour range of the mobile device's display to provide e.g. a greyscale UI, or a UI in limited colours;
ii) bluring the UI of the mobile device, i.e. blur the displayed user interface elements (e.g. icons, windows, text etc.);
iii) modifying the resolution of the mobile device's display to provide, e.g. a reduced/low resolution;
iv) modifying the brightness of the mobile device's display to provide, e.g. a reduced/low brightness by reducing the intensity of the backlight to make the screen inconveniently dark; and/or
v) modifying the effective screen area size of the mobile device's displayed output to provide, e.g. a small/reduced effective output screen area size.

Other, non-visual, 'medium' functions can be aural or haptic based. For example, haptics/a vibrator of the mobile device can be used to cause the phone to repeatedly vibrate; or a speaker could be caused to output an (e.g. annoying) background noise.

Yet further 'medium' functions can include reducing the interaction speed of the Ul (e.g. to introduce a short delay before feedback is provided to user interactions) or to reduce the processing speed of the device, etc. Thus the aesthetics and/or performance of the device may be deliberately reduced to reduce the quality of the user experience.

Each of these medium functions allows the user to fully access features of the phone, but the user experience is deliberately spoiled to discourage non-essential use.

Hard or medium functions could be disabled (i.e. normal use of the user device is restored) in response to cessation of either of the two criteria - i.e. the first user is no longer with the second user or is no longer distracted. For the cessation of distraction, this can be as simple as the first user not having used the user device for a minimum period of time (e.g. for 15 mins) or has used their phone for less than a certain amount of time (e.g. 1 minute) within such a period.

In some examples, the triggered function is configured to, at least one of:
present a notification or alert to the first user;
impede the first user using one or more functions of the user device; and
preclude the first user using one or more functions of the user device.

In some examples, the triggered function comprises at least one of:
generating an alert to the first user, for examples such as generation of a visual, audio and/or haptic output;
disabling at least one application of the user device;
disabling at least one software feature of the user device;
disabling at least one hardware feature of the user device; and
operating the user device in a restricted mode, for example, restricting the user device so as to enable the operation of only pre-determined one or more software feature(s)/application(s) and hardware feature(s).

In some examples, the triggered function comprises a modification of the user device' user interface to hinder/impede user interaction and mildly inconvenience first user. The triggered function may comprise an adjustment of at least one of:
a colour scheme of a user interface of the user device;
a resolution of a display of the user device;
a haptic feedback scheme of the user device;
a brightness level of a display of the user device;
a responsiveness of a user interface of the user device;
a processing speed of the user device; and
a size of a screen display of a display of the user device;

In some examples, the triggered function is performed for a predetermined period of time; or performed whilst the user distraction and presence criteria continue to be met. The triggered function may not necessarily be a binary function (i.e. merely having two states) but may be a continuous function that can be varied, e.g. increased/decreased whilst distractive usage continues. For example, the function may have a "level" that can be varied. By way of example, rather than just playing a sound/alert, its volume level could be gradually increased. Rather than switching from colour to black and white, a saturation level of the displayed output could be gradually decreased. The change in level could be progressive over time so that a short period of distraction mildly detracts from the user experience which gets worse as the distraction continues, thereby discouraging continued distractive usage of the user device.

In some examples, the function may additionally be triggered in response to further determining that both a) the user distraction criterion has been met, and also b) a second presence criteria has been met; the second presence criteria being met corresponding to determining a proximity of the second user to the user device and/or first user to be above a second threshold level (e.g. determining a separation distance greater than a second separation distance threshold). Such examples would enable a function to be triggered (e.g. a notification/alarm) in the case where the second user/child wondered off away from the first user/parent whilst the first user was in a distracted state.

The illustration of a particular order to the blocks does not necessarily imply that there is a required or preferred order for the blocks and the order and arrangement of the block can be varied. Furthermore, it can be possible for some blocks to be omitted.

It will be understood that each block and combinations of blocks, can be implemented by various means, such as hardware, firmware, and/or software including one or more computer program instructions. For example, one or more of the procedures described above can be embodied by computer program instructions. In this regard, the computer program instructions which embody the procedures described above can be stored by a memory storage device and performed by a processor.

FIG. 3 schematically illustrates a block diagram of an apparatus 300. The apparatus comprises a controller 301. Implementation of the controller can be as controller circuitry. Implementation of the controller can be in hardware alone (for example processing circuitry comprising one or more processors or digital signal processors and memory circuitry comprising one or more memory elements), have certain aspects in software including firmware alone or can be a combination of hardware and software (including firmware).

The controller 301 can be implemented using instructions that enable hardware functionality, for example, by using executable computer program instructions in a general-purpose or special-purpose processor that can be stored on a computer readable storage medium (disk, memory etc.) or carried by a signal carrier to be performed by such a processor.

In the illustrated example, the apparatus 300 comprises a controller 301 which is provided by a processor 302 and memory 303. Although a single processor and a single memory are illustrated in other implementations there can be multiple processors and/or there can be multiple memories some or all of which can be integrated/removable and/or can provide permanent/semi-permanent/ dynamic/cached storage.

The memory 303 stores a computer program 304 comprising computer program code/instructions 305 that control the operation of the apparatus when loaded into the processor 302. The computer program instructions provide the logic and routines that enable the apparatus to perform the methods presently described, not lest for example with respect to FIGS 1 and 2, as well as FIG's 4 - 6 discussed below.

The processor 302 is configured to read from and write to the memory 303. The processor 302 can also comprise an input interface 306 via which data (e.g. not least first and second data) and/or commands are received/input to the processor 302, and an output interface 307 via which data and/or commands (e.g. command to trigger function) are output by the processor 302. The apparatus may comprise means for receiving and/or detecting the first and second data. Such means 308 may comprise one or more: sensors, detectors, image capture devices, audio capture devices cameras, microphones, user input interfaces (e.g. not least a touch screen, keys or buttons), timer/clock, proximity detector, radars, light detection and ranging devices, a wired/wireless data interface for communicating with remote devices/sensors, and a wireless data receiver. The function that the apparatus causes to be triggered on the user device may control/adjust means 309, e.g. visual/audio/haptic output means of the user device (such as a display, speaker, and vibrator of the user device). As discussed above, the function that the apparatus causes to be triggered on the user device may adjust the operation of the user device and its operational mode, such adjusting the user interface, user device functionality and features, functionality and features of software applications of the user device.

The apparatus 300 therefore comprises:
at least one processor 302; and
at least one memory 303 including computer program code 305;
the at least one memory and the computer program code configured to, with the at least one processor, cause the apparatus at least to perform:
determining whether a user distraction criterion has been met, the user distraction criterion relating to use of the apparatus, by a first user, exceeding a threshold level;
determining whether a presence criterion has been met, the presence criterion relating to a proximity of at least a second user to the apparatus and/or first user being below a threshold level; and
responsive to determining that the user distraction and presence criteria have been met, causing a function to be triggered on the user device.

The computer program instructions cause the apparatus to perform determining whether a user distraction criterion has been met, the user distraction criterion relating to use of the user device, by a first user, exceeding a threshold level; determining whether a presence criterion has been met, the presence criterion relating to a proximity of at least a second user to the user device and/or first user being below a threshold level; and
responsive to determining that the user distraction and presence criteria have been met, causing the triggering of a function on the user device.

The computer program 304 can arrive at the apparatus 300 via any suitable delivery mechanism 311. The delivery mechanism 311 can be, for example, a non-transitory computer-readable storage medium, a computer program product, a memory device, a record medium such as a compact disc read-only memory, or digital versatile disc, or an article of manufacture that tangibly embodies the computer program 304. The delivery mechanism can be a signal configured to reliably transfer the computer program 304. The apparatus 300 can receive, propagate or transmit the computer program 304 as a computer data signal.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In some examples, the apparatus comprises means 308 configured to receive and/or detect the first data; and means 301 configured to determine the user distraction criterion using the first data. In some examples, the apparatus comprises means 308 configured to receive and/or detect the second data; and means 301 configured to determine the presence criterion using the second data.

The apparatus can be provided as a device 310, not least such as: a wireless communications device, a portable electronic device, a client device, mobile cellular telephone, a smart phone, a tablet device, a server etc. In some, but not necessarily all examples, the apparatus is embodied as the user device. The apparatus can be embodied by a computing device, not least such as those mentioned above. However, in some examples, the apparatus can be embodied as a chip, chip set or module, i.e. for use in any of the foregoing. As used here 'module' refers to a unit or apparatus that excludes certain parts/components that would be added by an end manufacturer or a user.

In one example, the apparatus is embodied on a hand held portable electronic device, such as a mobile telephone, wearable computing device or personal digital assistant, that can additionally provide one or more audio/text/video communication functions (e.g. tele-communication, video-communication, and/or text transmission (Short Message Service (SMS)/ Multimedia Message Service (MMS)/emailing) functions), interactive/non-interactive viewing functions (e.g. web-browsing, navigation, TV/program viewing functions), music recording/playing functions (e.g. Moving Picture Experts Group-1 Audio Layer3 (MP3) or other format and/or (frequency modulation/amplitude modulation) radio broadcast recording/playing), downloading/sending of data functions, image capture function (e.g. using a (e.g. in-built) digital camera), and gaming functions.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

Where a structural feature has been described, it can be replaced by means for performing one or more of the functions of the structural feature whether that function or those functions are explicitly or implicitly described.

FIG. 4 schematically illustrates an example system 420 of the subject matter described herein wherein the apparatus 300 is embodied in the user device 400 of the first user 401. However, it is to be appreciated that the apparatus 300 may be embodied in a device separate and distinct from the user device (e.g. a device such as 601 of FIG. 6, or a server, that the apparatus can communicate with). The user device 400 comprises means to determine whether a user distraction criterion of the first user, due to the first user's usage of the user device 400, has been met. The user device 400 also comprises means to determine whether a presence criterion has been met, namely whether the second user 402, or a second apparatus 403 associated with the second user (not least such as portable mobile device or wearable device of the second user, such as a wrist worn device) is sufficiently proximal to the user device/first user, i.e. whether the separation distance d is within a threshold separation distance.

As discussed above, in some examples, the presence/proximity of the second user/second apparatus to the first user/user device may be detected and determined via the transmission and detection of signals 404 between the user device and the second apparatuses, e.g. the use of transceivers and short range wireless signals and protocols such as Bluetooth ^{®}, NFC, or an RFID tag. Additionally or alternatively, location information may be wirelessly transmitted from the second apparatus to the user device, for example where the second apparatus comprises an on-board location determination means, such as a built in GPS system. The receipt of location data of second user/second user's apparatus can be compared to location data of the user device/first user to determine their relative locations to one another and separation distance.

It is to be appreciated that examples of the disclosure can be readily adapted to use with multiple second users, e.g. multiple children in the care of the first user/parent.

Similar approaches to those discussed above could be used to determine whether another person is also present - either "any" other person or a specific other person (e.g. the other parent). In the case of the other parent, this may be readily accomplished since, unlike a small child, the other parent will be an adult who will likely be carrying their own device/phone and the first parent's phone can simply a) detect the presence of the other parent's phone using e.g. Bluetooth ^{®}, or b) send a message to the other parent's phone asking for its location (e.g. its GPS location).

In the event that there are a plurality of first users, i.e. there are two or more persons (e.g. parents/carers) meant to be looking after the second user/child; where two or more of the first users are present then it may not be desirable to trigger a function for reducing distraction of one the first users since the other first user(s) may be interacting with the child. Therefore it may not be so important that one of the first users is distracted by their phone. Of course, it is possible in such a case that the plurality of first users are present together but are all distracted by their phones - in such a case each first users' phone could determine whether its respective first user is distracted but then trigger the function only in the event that each of the other first users' phone provides an indication that the other first users are also distracted at that time. Alternatively, it could trigger the function unless each of the other first users' phone indicates that its respective first user is not distracted at that time. In some examples, where the plurality of first users are present (i.e. meeting the presence criteria), a function could be triggered on one or more of the plurality of first user's phones when just one (or more) of the first users is distracted, i.e. all the first users would need to be in a non-distracted state else the function would trigger.

In some examples, where there are a plurality of first users each with their own respective user device (i.e. such that there are a plurality of first apparatuses), the first apparatuses may communicate their usage status between themselves, for example over Bluetooth ^{®}, Wi-Fi or using cellular data.. In the event that the user distraction criterion has been met on all of the first apparatuses, a function is triggered on all the first apparatuses.

For example, if there were two first users (e.g. child-care workers) it could be allowable for one of them to be distracted and that user to still continue to use their respective first apparatus/device unobstructed. But, in the event both of the first users are deemed to be distracted at the same time (i.e. both their devices meeting the user distraction criterion simultaneously) a function is triggered on one or both devices to alert them to pay attention to the surrounding proximate second user(s) (e.g. child/children). In this example the first user devices receive information about the usage of the other first user device. The information may be received directly from the other first user device, or via a network, or one of the first user devices could detect that the other first user of the other first user device has become distracted. It could be detected by using a camera, microphone, radar and/or the like. For example, the first users could be wearing camera devices which detect each other, and if one first user's device no longer detects the device of the other first user it could be deemed that at least one of them has become distracted. When both are deemed distracted (user distraction criterion met) a function is triggered.

FIGs. 5 and 6 schematically illustrates a yet further example method 500 and system 600 along the lines discussed above wherein there are multiple first users 401a, 401b (e.g. multiple parents/carers/adults) each with their own user device 400a, 400b (one or more of which may comprise an apparatus 300 as discussed above) looking after one or more second users 402.

Block 501 effectively corresponds to blocks 101 and 102, namely the determination of user distraction for a first user 401a and presence criteria of the second user 402 relative to the first user 401a/the first user's user device 400a.

In block 502, a similar determination is performed with respect to the other first user 401b, namely a determination of user distraction for the other first user (referred to as a "third user" hereinafter) 401b and presence criteria of the second user 402 relative to the third user 401b/the third user's user device 400b (e.g. a separation distance between the second user 402/second user's apparatus 403 relative to the third user 401b/third user's user device400b being below a threshold distance).

According to the invention, the first user device 400a is configured to:
determine use, by the third user, of the third user's user device;
determine whether at least a second user distraction criterion has been met, the at least second user distraction criterion relating to use, by the third user, of the third user's user device:
determine a proximity of the third user to the at least second user;
determine whether a second presence criterion has been met, the second presence criterion relating to a proximity of the third user to the at least second user; and responsive to determining that the first and at least second user distraction criteria and the first and second presence criteria have been met, causing the triggering of a function on the user device (as per block 503).

The system 600 of FIG 6, also schematically illustrates a further apparatus/device 601 that can be used with examples of the present disclosure, wherein the further apparatus/device 601 generates and detects or receives the first and/or second data and transmits the same to the first apparatus 401a. The further apparatus/device 601 may be, not least for example: an external sensor/detector, an audio or video monitoring device, or even a smart speaker configured to detect the first and/or second data. The apparatus 300 of Fig 3 may be embodied in the further apparatus/device 601. The further apparatus/device 601 may also be configured to determine the distraction and/or presence criteria. For example, it may be capable of determining that a child and a parent are present together (e.g. via facial recognition and/or voice recognition).

One or more of the devices 400a, 400b, 403 and 601 may comprises its own transmitter and receiver for enabling wireless communication therebetween via a communications channel 404a-f.

In this description, 'communication' and its derivatives mean operationally in communication. It should be appreciated that any number or combination of intervening components can exist (including no intervening components/devices), i.e. so as to provide direct or indirect communication. Any such intervening components/devices can include hardware and/or software components.

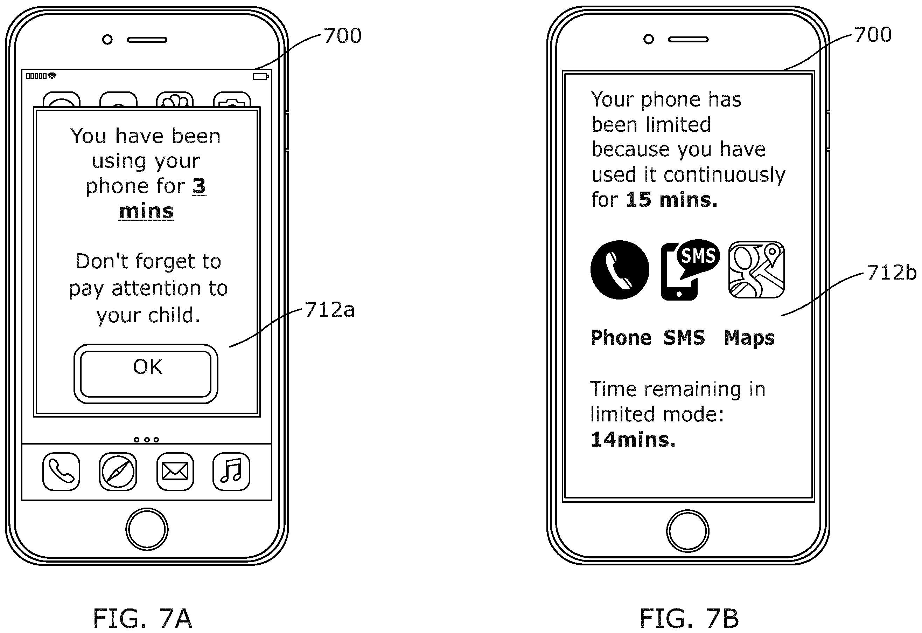

FIGs. 7A and 7B illustrate examples of triggered functions. FIG 7A illustrates a "soft" function, comprising a popup notification 712a on the first user's user device 700. Fig 7B illustrates a "hard" function, wherein operation of the user device 700 is restricted and functionality thereof is limited to selected applications/functions, such as merely permitting the use of certain communication functions and specific predetermined applications. In the "hard" function/restriction example of FIG 7B, all phone functions apart from: Phone, SMS and Maps have been prohibited and will remain prohibited for a predetermined period of time, in this particular example, for the next 14 mins.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

The apparatus can be provided in an electronic device, for example, mobile terminal, according to an exemplary embodiment of the present disclosure. It should be understood, however, that a mobile terminal is merely illustrative of an electronic device that would benefit from examples of implementations of the present disclosure and, therefore, should not be taken to limit the scope of the present disclosure to the same. While certain in certain implementation examples the apparatus can be provided in a mobile terminal, other types of electronic devices, such as, but not limited to, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The above described examples find application as enabling components of: electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; automotive systems; telecommunication systems; and related software and services.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the "determining" (and grammatical variants thereof) can include, not least: calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing, and the like.

In this description, reference has been made to various examples. The description of features or functions in relation to an example indicates that those features or functions are present in that example. The use of the term 'example' or 'for example' or 'can' in the text denotes, whether explicitly stated or not, that such features or functions are present in at least the described example, whether described as an example or not, and that they can be, but are not necessarily, present in some or all other examples. Thus 'example', 'for example' or 'can' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasis an inclusive meaning but the absence of these terms should not be taken to infer and exclusive meaning.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

In the above description, the apparatus described can alternatively or in addition comprise an apparatus which in some other embodiments comprises a distributed system of apparatus, for example, a client/server apparatus system. In examples of embodiments where an apparatus provided forms (or a method is implemented as) a distributed system, each apparatus forming a component and/or part of the system provides (or implements) one or more features which collectively implement an example of the present disclosure. In some examples of embodiments, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

## Claims

1. An apparatus comprising means for:
determining whether a user distraction criterion has been met, the user distraction criterion relating to use of a user device (300, 400, 400a, 700), by a first user (401, 401a), exceeding a threshold level;
determining whether a presence criterion has been met, the presence criterion relating to:
a proximity of at least a second user (402) to the user device (300, 400, 400a, 700) being below a threshold level, and/or
a proximity of the at least second user (402) to the first user (401, 401a) being below a threshold level;
determining use, by a third user (401b), of another user device (300, 400b);
determining whether at least a second user distraction criterion has been met, the at least second user distraction criterion relating to use, by the third user (401b), of the another user device (300, 400b);
determining a proximity of:
the another user device (300, 400b) to the at least second user (402), and/or
the third user (401b) to the at least second user (402);
determining whether a second presence criterion has been met, the second presence criterion relating to a proximity of the third user (401b) to the at least second user (402); and
responsive to determining that the first and at least second user distraction criteria and the first and second presence criteria have been met, causing the triggering of a function on the user device (300, 400, 400a, 700) and/or the another user device (300, 400b).

2. The apparatus of claim 1, further comprising:
means configured to receive and/or detect first data indicative of use of the user device; and
means configured to determine the user distraction criterion using the first data.

3. The apparatus of claim 2, wherein the first data comprises an indication of at least one of:
user input;
the user device being unlocked;
video being output;
audio being output;
content items being presented; and
a user's gaze.

4. The apparatus of any one or more of previous claims 2 to 3, wherein the first data comprises an indication of at least one of:
use of the user device for a time period exceeding a threshold;
a total use time of the user device within a time period exceeding a threshold;
a number of user inputs to the user device within a predetermined time period exceeding a threshold; and
a number of content items presented on the user device within a predetermined time period exceeding a threshold.

5. The apparatus of any one or more of the previous claims, wherein the threshold level is at least one of: predetermined, variable, user adjustable and context dependent.

6. The apparatus of any one or more of the previous claims, further comprising:
means configured to receive and/or detect second data indicative of: the proximity of the at least second user to the user device or a location of the second user; and
means configured to determine the presence criterion using the second data.

7. The apparatus of claim 6, wherein the second data comprises one or more of:
location information of the at least second user;
information indicative of a proximity of the at least second user to the user device;
location information of at least one device of the at least second user; and
information indicative of a proximity of at least one device of the at least second user to the user device.

8. The apparatus of any one or more of the previous claims, further comprising means configured to:
capture visual and/or audio data; and
determine the presence criterion based on the captured visual and/or audio data.

9. The apparatus of any one or more of the previous claims, wherein the triggered function is configured to, at least one of:
present a notification or alert to the first user;
impede the first user using one or more functions of the user device; and
preclude the first user using one or more functions of the user device.

10. The apparatus of any one or more of the previous claims, wherein the apparatus is comprised in the user device.

11. The apparatus of any one or more of claims 1 to 9, wherein the apparatus is comprised in a device separate of the user device.

12. A chipset, a module, a portable electronic device and/or a server comprising the apparatus of any one or more of previous claims 1 to 11.

13. A method comprising causing, at least in part, actions that result in:
determining whether a user distraction criterion has been met, the user distraction criterion relating to use of a user device (300, 400, 400a, 700), by a first user (401, 401a), exceeding a threshold level;
determining whether a presence criterion has been met, the presence criterion relating to:
a proximity of at least a second user (402) to the user device (300, 400, 400a, 700) being below a threshold level, and/or
a proximity of the at least second user (402) to the first user (401, 401a) being below a threshold level;
determining use, by a third user (401b), of another user device (300, 400b);
determining whether at least a second user distraction criterion has been met, the at least second user distraction criterion relating to use, by the third user (401b), of the another user device (300, 400b);
determining a proximity of:
the another user device (300, 400b) to the at least second user (402), and/or
the third user (401b) to the at least second user (402);
determining whether a second presence criterion has been met, the second presence criterion relating to a proximity of the third user (401b) to the at least second user (402); and
responsive to determining that the first and at least second user distraction criteria and the first and second presence criteria have been met, causing the triggering of a function on the user device (300, 400, 400a, 700) and/or the another user device (300, 400b).

14. The method of claim 13 further comprising:
receiving and/or detecting first data indicative of use of the user device; and
determining the user distraction criterion using the first data.

15. Computer program instructions for causing an apparatus to perform:
determining whether a user distraction criterion has been met, the user distraction criterion relating to use of a user device (300, 400, 400a, 700), by a first user (401, 401a), exceeding a threshold level;
determining whether a presence criterion has been met, the presence criterion relating to:
a proximity of at least a second user (402) to the user device (300, 400, 400a, 700) being below a threshold level, and/or
a proximity of the at least second user (402) to the first user (401, 401a) being below a threshold level;
determining use, by a third user (401b), of another user device (300, 400b);
determining whether at least a second user distraction criterion has been met,
the at least second user distraction criterion relating to use, by the third user (401b), of the another user device (300, 400b);
determining a proximity of:
the another user device (300, 400b) to the at least second user (402), and/or
the third user (401b) to the at least second user (402);
determining whether a second presence criterion has been met, the second presence criterion relating to a proximity of the third user (401b) to the at least second user (402); and
responsive to determining that the first and at least second user distraction criteria and the first and second presence criteria have been met, causing the triggering of a function on the user device (300, 400, 400a, 700) and/or the another user device (300, 400b).

## Patentansprüche

1. Einrichtung, die Mittel für Folgendes umfasst:
Bestimmen, ob ein Benutzerablenkungskriterium erfüllt ist, wobei das Benutzerablenkungskriterium die Verwendung einer Benutzervorrichtung (300, 400, 400a, 700) durch einen ersten Benutzer (401, 401a) betrifft, die ein Schwellwertniveau überschreitet;
Bestimmen, ob ein Anwesenheitskriterium erfüllt ist, wobei das Anwesenheitskriterium Folgendes betrifft:
eine Nähe von mindestens einem zweiten Benutzer (402) zur Benutzervorrichtung (300, 400, 400a, 700) liegt unter einem Schwellwertniveau, und/oder
eine Nähe des mindestens einen zweiten Benutzers (402) zum ersten Benutzer (401, 401a) liegt unter einem Schwellwertniveau;
Bestimmen der Verwendung einer anderen Benutzervorrichtung (300, 400b) durch einen dritten Benutzer (401b);
Bestimmen, ob mindestens ein zweites Benutzerablenkungskriterium erfüllt ist, wobei das mindestens eine zweite Benutzerablenkungskriterium die Verwendung der anderen Benutzervorrichtung (300, 400b) durch den dritten Benutzer (401b) betrifft;
Bestimmen einer Nähe von Folgendem:
der anderen Benutzervorrichtung (300, 400b) zu dem mindestens einen zweiten Benutzer (402), und/oder
dem dritten Benutzer (401b) zu dem mindestens einen zweiten Benutzer (402);
Bestimmen, ob ein zweites Anwesenheitskriterium erfüllt ist, wobei das zweite Anwesenheitskriterium eine Nähe des dritten Benutzers (401b) zu dem mindestens einen zweiten Benutzer (402) betrifft; und
in Reaktion auf das Bestimmen, dass das erste und das mindestens eine zweite Benutzerablenkungskriterium und das erste und das zweite Anwesenheitskriterium erfüllt sind, Bewirken des Auslösens einer Funktion der Benutzervorrichtung (300, 400, 400a, 700) und/oder der anderen Benutzervorrichtung (300, 400b).

2. Einrichtung nach Anspruch 1, die ferner Folgendes umfasst:
Mittel, die dazu ausgelegt sind, erste Daten, die die Verwendung der Benutzervorrichtung anzeigen, zu empfangen und/oder zu detektieren; und
Mittel, die dazu ausgelegt sind, das Benutzerablenkungskriterium unter Verwendung der ersten Daten zu bestimmen.

3. Einrichtung nach Anspruch 2, wobei die ersten Daten eine Anzeige von mindestens einem von Folgendem umfassen:
Benutzereingabe;
die Benutzervorrichtung, die entsperrt ist;
Videoausgabe;
Audioausgabe;
Präsentation von Inhaltselementen; und
einen Blick des Benutzers.

4. Einrichtung nach einem der vorhergehenden Ansprüche 2 bis 3, wobei die ersten Daten eine Anzeige von mindestens einem von Folgendem umfassen:
Verwendung der Benutzervorrichtung für eine Zeitperiode, die einen Schwellwert überschreitet;
Gesamtverwendungszeit der Benutzervorrichtung innerhalb einer Zeitperiode, die einen Schwellwert überschreitet;
eine Anzahl von Benutzereingaben in die Benutzervorrichtung innerhalb einer Zeitperiode, die einen Schwellwert überschreitet; und
eine Anzahl von Inhaltselementen, die innerhalb einer vorbestimmten Zeitperiode auf der Benutzervorrichtung präsentiert werden, die einen Schwellwert überschreitet.

5. Einrichtung nach einem oder mehreren der vorhergehenden Ansprüche, wobei das Schwellwertniveau mindestens eines von Folgendem ist: vorbestimmt, variabel, benutzereinstellbar und kontextabhängig.

6. Einrichtung nach einem oder mehreren der vorhergehenden Ansprüche, die ferner Folgendes umfasst:
Mittel, die dazu ausgelegt sind, zweite Daten die Folgendes anzeigen, zu empfangen und/oder zu detektieren: die Nähe des mindestens einen zweiten Benutzers zur Benutzervorrichtung oder einen Standort des zweiten Benutzers, und
Mittel, die dazu ausgelegt sind, das Anwesenheitskriterium unter Verwendung der zweiten Daten zu bestimmen.

7. Einrichtung nach Anspruch 6, wobei die zweiten Daten eines oder mehreres von Folgendem umfassen:
Standortinformationen des mindestens einen zweiten Benutzers;
Informationen, die eine Nähe des mindestens einen zweiten Benutzers zur Benutzervorrichtung anzeigen;
Standortinformationen von mindestens einer Vorrichtung des mindestens einen zweiten Benutzers; und
Informationen, die eine Nähe von mindestens einer Vorrichtung des mindestens einen zweiten Benutzers zur Benutzervorrichtung anzeigen.

8. Einrichtung nach einem oder mehreren der vorhergehenden Ansprüche, die ferner Mittel umfassen, die zu Folgendem ausgelegt sind:
Erfassen von visuellen und/oder Audiodaten; und
Bestimmen des Anwesenheitskriteriums auf Basis der erfassten visuellen und/oder Audiodaten.

9. Einrichtung nach einem oder mehreren der vorhergehenden Ansprüche, wobei die ausgelöste Funktion mindestens zu einem von Folgendem ausgelegt ist:
Präsentieren einer Benachrichtigung oder Warnung für den ersten Benutzer;
Erschweren, dass der erste Benutzer eine oder mehrere Funktionen der Benutzervorrichtung verwendet; und
Ausschließen, dass der erste Benutzer eine oder mehrere Funktionen der Benutzervorrichtung verwendet.

10. Einrichtung nach einem oder mehreren der vorhergehenden Ansprüche, wobei die Einrichtung in der Benutzervorrichtung umfasst ist.

11. Einrichtung nach einem oder mehreren der Ansprüche 1 bis 9, wobei die Einrichtung in einer Vorrichtung umfasst ist, die von der Benutzervorrichtung getrennt ist.

12. Chipsatz, Modul, tragbare elektronische Vorrichtung und/oder Server, der/die/das die Einrichtung nach einem der vorhergehenden Ansprüche 1 bis 11 umfasst.

13. Verfahren, das das mindestens teilweise Bewirken von Aktionen umfasst, die in Folgendem resultieren:
Bestimmen, ob ein Benutzerablenkungskriterium erfüllt ist, wobei das Benutzerablenkungskriterium die Verwendung einer Benutzervorrichtung (300, 400, 400a, 700), durch einen ersten Benutzer (401, 401a) betrifft, die ein Schwellwertniveau überschreitet;
Bestimmen, ob ein Anwesenheitskriterium erfüllt ist, wobei das Anwesenheitskriterium Folgendes betrifft:
eine Nähe von mindestens einem zweiten Benutzer (402) zur Benutzervorrichtung (300, 400, 400a, 700) liegt unter einem Schwellwertniveau, und/oder
eine Nähe des mindestens einen zweiten Benutzers (402) zum ersten Benutzer (401, 401a) liegt unter einem Schwellwertniveau;
Bestimmen der Verwendung einer anderen Benutzervorrichtung (300, 400b) durch einen dritten Benutzer (401b);
Bestimmen, ob mindestens ein zweites Benutzerablenkungskriterium erfüllt ist, wobei das mindestens eine zweite Benutzerablenkungskriterium die Verwendung der anderen Benutzervorrichtung (300, 400b) durch den dritten Benutzer (401b) betrifft;
Bestimmen einer Nähe von Folgendem:
der anderen Benutzervorrichtung (300, 400b) zu dem mindestens einen zweiten Benutzer (402), und/oder
dem dritten Benutzer (401b) zu dem mindestens einen zweiten Benutzer (402);
Bestimmen, ob ein zweites Anwesenheitskriterium erfüllt ist, wobei das zweite Anwesenheitskriterium eine Nähe des dritten Benutzers (401b) zu dem mindestens einen zweiten Benutzer (402) betrifft; und
in Reaktion auf das Bestimmen, dass das erste und das mindestens eine zweite Benutzerablenkungskriterium und das erste und das zweite Anwesenheitskriterium erfüllt sind, Bewirken des Auslösens einer Funktion der Benutzervorrichtung (300, 400, 400a, 700) und/oder der anderen Benutzervorrichtung (300, 400b).

14. Verfahren nach Anspruch 13, das ferner Folgendes umfasst:
Empfangen und/oder Detektieren von ersten Daten, die die Verwendung der Benutzervorrichtung anzeigen; und
Bestimmen des Benutzerablenkungskriteriums unter Verwendung der ersten Daten.

15. Computerprogrammanweisungen zum Bewirken, dass eine Einrichtung Folgendes durchführt:
Bestimmen, ob ein Benutzerablenkungskriterium erfüllt ist, wobei das Benutzerablenkungskriterium die Verwendung einer Benutzervorrichtung (300, 400, 400a, 700), durch einen ersten Benutzer (401, 401a) betrifft, die ein Schwellwertniveau überschreitet;
Bestimmen, ob ein Anwesenheitskriterium erfüllt ist, wobei das Anwesenheitskriterium Folgendes betrifft:
eine Nähe von mindestens einem zweiten Benutzer (402) zur Benutzervorrichtung (300, 400, 400a, 700) liegt unter einem Schwellwertniveau, und/oder
eine Nähe des mindestens einen zweiten Benutzers (402) zum ersten Benutzer (401, 401a) liegt unter einem Schwellwertniveau;
Bestimmen der Verwendung einer anderen Benutzervorrichtung (300, 400b) durch einen dritten Benutzer (401b);
Bestimmen, ob mindestens ein zweites Benutzerablenkungskriterium erfüllt ist, wobei das mindestens eine zweite Benutzerablenkungskriterium die Verwendung der anderen Benutzervorrichtung (300, 400b) durch den dritten Benutzer (401b) betrifft;
Bestimmen einer Nähe von Folgendem:
der anderen Benutzervorrichtung (300, 400b) zu dem mindestens einen zweiten Benutzer (402), und/oder
dem dritten Benutzer (401b) zu dem mindestens einen zweiten Benutzer (402);
Bestimmen, ob ein zweites Anwesenheitskriterium erfüllt ist, wobei das zweite Anwesenheitskriterium eine Nähe des dritten Benutzers (401b) zu dem mindestens einen zweiten Benutzer (402) betrifft; und
in Reaktion auf das Bestimmen, dass das erste und das mindestens eine zweite Benutzerablenkungskriterium und das erste und das zweite Anwesenheitskriterium erfüllt sind, Bewirken des Auslösens einer Funktion der Benutzervorrichtung (300, 400, 400a, 700) und/oder der anderen Benutzervorrichtung (300, 400b).

## Revendications

1. Appareil comprenant des moyens pour :
déterminer si un critère de distraction de l'utilisateur a été satisfait, le critère de distraction de l'utilisateur concernant le dépassement d'un niveau de seuil d'utilisation d'un dispositif utilisateur (300, 400, 400a, 700) par un premier utilisateur (401, 401a) ;
déterminer si un critère de présence a été satisfait, le critère de présence concernant :
une proximité se trouvant sous un niveau de seuil d'au moins un deuxième utilisateur (402) par rapport au dispositif utilisateur (300, 400, 400a, 700), et/ou
une proximité se trouvant sous un niveau de seuil du au moins un deuxième utilisateur (402) par rapport au premier utilisateur (401, 401a) ;
déterminer l'utilisation par un troisième utilisateur (401b) d'un autre dispositif utilisateur (300, 400b) ;
déterminer si au moins un deuxième critère de distraction de l'utilisateur a été satisfait, le au moins un deuxième critère de distraction de l'utilisateur concernant l'utilisation par le troisième utilisateur (401b) de l'autre dispositif utilisateur (300, 400b) ;
déterminer une proximité :
de l'autre dispositif utilisateur (300, 400b) par rapport au au moins un deuxième utilisateur (402), et/ou
du troisième utilisateur (401b) par rapport au au moins un deuxième utilisateur (402) ;
déterminer si un deuxième critère de présence a été satisfait, le deuxième critère de présence concernant une proximité du troisième utilisateur (401b) par rapport au au moins un deuxième utilisateur (402) ; et
en réponse à la détermination de la satisfaction des critères de distraction du premier et du au moins un deuxième utilisateur et des premier et deuxième critères de présence, provoquer le déclenchement d'une fonction sur le dispositif utilisateur (300, 400, 400a, 700) et/ou l'autre dispositif utilisateur (300, 400b).

2. Appareil de la revendication 1, comprenant en outre :
des moyens configurés pour recevoir et/ou détecter des premières données indiquant l'utilisation du dispositif utilisateur ; et
des moyens configurés pour déterminer le critère de distraction de l'utilisateur en utilisant les premières données.

3. Appareil de la revendication 2, dans lequel les premières données comprennent une indication d'au moins un parmi :
une entrée d'utilisateur ;
un déverrouillage du dispositif utilisateur ;
la sortie d'une vidéo ;
la sortie d'un audio ;
la présentation d'articles de contenu ; et
un regard de l'utilisateur.

4. Appareil de l'une quelconque ou plusieurs des revendications précédentes 2 à 3, dans lequel les premières données comprennent une indication d'au moins un parmi :
le dépassement d'un seuil d'utilisation pendant une période de temps du dispositif utilisateur ;
le dépassement d'un seuil d'un temps d'utilisation total du dispositif utilisateur dans une période de temps ;
le dépassement d'un seuil d'un nombre d'entrées utilisateur dans le dispositif utilisateur dans une période de temps prédéterminée ; et
le dépassement d'un seuil d'un nombre d'articles de contenu présentés sur le dispositif utilisateur dans une période de temps prédéterminée.

5. Appareil de l'une quelconque ou plusieurs des revendications précédentes, dans lequel le niveau de seuil est au moins dans l'un des cas suivants : prédéterminé, variable, réglable par l'utilisateur et dépendant du contexte.

6. Appareil de l'une quelconque ou plusieurs des revendications précédentes, comprenant en outre :
des moyens configurés pour recevoir et/ou détecter des deuxièmes données indiquant :
la proximité du au moins un deuxième utilisateur par rapport au dispositif utilisateur ou un emplacement du deuxième utilisateur ; et
des moyens configurés pour déterminer le critère de présence en utilisant les deuxièmes données.

7. Appareil de la revendication 6, dans lequel les deuxièmes données comprennent une ou plusieurs parmi :
des informations d'emplacement du au moins un deuxième utilisateur ;
des informations indiquant une proximité du au moins un deuxième utilisateur par rapport au dispositif utilisateur ;
des informations d'emplacement d'au moins un dispositif du au moins un deuxième utilisateur ; et
des informations indiquant une proximité d'au moins un dispositif du au moins un deuxième utilisateur par rapport au dispositif utilisateur.

8. Appareil de l'une quelconque ou plusieurs des revendications précédentes, comprenant en outre des moyens configurés pour :
capturer des données visuelles et/ou audio ; et
déterminer le critère de présence sur la base des données visuelles et/ou audio capturées.

9. Appareil de l'une quelconque ou plusieurs des revendications précédentes, dans lequel la fonction déclenchée est configurée pour effectuer au moins l'une des actions suivantes :
présenter une notification ou une alerte au premier utilisateur ;
gêner l'utilisation d'une ou plusieurs fonctions du dispositif utilisateur par le premier utilisateur ; et
empêcher l'utilisation d'une ou plusieurs fonctions du dispositif utilisateur par le premier utilisateur.

10. Appareil de l'une quelconque ou plusieurs des revendications précédentes, dans lequel l'appareil est compris dans le dispositif utilisateur.

11. Appareil de l'une quelconque ou plusieurs des revendications 1 à 9, dans lequel l'appareil est compris dans un dispositif distinct du dispositif utilisateur.

12. Jeu de puces, module, dispositif électronique portable et/ou serveur comprenant l'appareil de l'une quelconque ou plusieurs des revendications précédentes 1 à 11.

13. Procédé comprenant le fait de provoquer, au moins en partie, des actions qui ont pour résultat de :
déterminer si un critère de distraction de l'utilisateur a été satisfait, le critère de distraction de l'utilisateur concernant le dépassement d'un niveau de seuil d'utilisation d'un dispositif utilisateur (300, 400, 400a, 700) par un premier utilisateur (401, 401a) ;
déterminer si un critère de présence a été satisfait, le critère de présence concernant :
une proximité se trouvant sous un niveau de seuil d'au moins un deuxième utilisateur (402) par rapport au dispositif utilisateur (300, 400, 400a, 700), et/ou
une proximité se trouvant sous un niveau de seuil du au moins un deuxième utilisateur (402) par rapport au premier utilisateur (401, 401a) ;
déterminer l'utilisation par un troisième utilisateur (401b) d'un autre dispositif utilisateur (300, 400b) ;
déterminer si au moins un deuxième critère de distraction de l'utilisateur a été satisfait, le au moins un deuxième critère de distraction de l'utilisateur concernant l'utilisation par le troisième utilisateur (401b) de l'autre dispositif utilisateur (300, 400b) ;
déterminer une proximité :
de l'autre dispositif utilisateur (300, 400b) par rapport au au moins un deuxième utilisateur (402), et/ou
du troisième utilisateur (401b) par rapport au au moins un deuxième utilisateur (402) ;
déterminer si un deuxième critère de présence a été satisfait, le deuxième critère de présence concernant une proximité du troisième utilisateur (401b) par rapport au au moins un deuxième utilisateur (402) ; et
en réponse à la détermination de la satisfaction des critères de distraction du premier et du au moins un deuxième utilisateur et des premier et deuxième critères de présence, provoquer le déclenchement d'une fonction sur le dispositif utilisateur (300, 400, 400a, 700) et/ou l'autre dispositif utilisateur (300, 400b).

14. Procédé de la revendication 13 comprenant en outre :
la réception et/ou la détection de premières données indiquant l'utilisation du dispositif utilisateur ; et
la détermination du critère de distraction de l'utilisateur en utilisant les premières données.

15. Instructions de programme informatique pour amener un appareil à réaliser les étapes suivantes :
déterminer si un critère de distraction de l'utilisateur a été satisfait, le critère de distraction de l'utilisateur concernant le dépassement d'un niveau de seuil d'utilisation d'un dispositif utilisateur (300, 400, 400a, 700) par un premier utilisateur (401, 401a) ;
déterminer si un critère de présence a été satisfait, le critère de présence concernant :
une proximité se trouvant sous un niveau de seuil d'au moins un deuxième utilisateur (402) par rapport au dispositif utilisateur (300, 400, 400a, 700), et/ou
une proximité se trouvant sous un niveau de seuil du au moins un deuxième utilisateur (402) par rapport au premier utilisateur (401, 401a) ;
déterminer l'utilisation par un troisième utilisateur (401b) d'un autre dispositif utilisateur (300, 400b) ;
déterminer si au moins un deuxième critère de distraction de l'utilisateur a été satisfait, le au moins un deuxième critère de distraction de l'utilisateur concernant l'utilisation par le troisième utilisateur (401b) de l'autre dispositif utilisateur (300, 400b) ;
déterminer une proximité :
de l'autre dispositif utilisateur (300, 400b) par rapport au au moins un deuxième utilisateur (402), et/ou
du troisième utilisateur (401b) par rapport au au moins un deuxième utilisateur (402) ;
déterminer si un deuxième critère de présence a été satisfait, le deuxième critère de présence concernant une proximité du troisième utilisateur (401b) par rapport au au moins un deuxième utilisateur (402) ; et
en réponse à la détermination de la satisfaction des critères de distraction du premier et du au moins un deuxième utilisateur et des premier et deuxième critères de présence, provoquer le déclenchement d'une fonction sur le dispositif utilisateur (300, 400, 400a, 700) et/ou l'autre dispositif utilisateur (300, 400b).
